## Europäisches Patentamt
## European Patent Office
## Office européen des brevets

(19)

(11) Veröffentlichungsnummer : **0 018 607**
**B1**

(12)

# EUROPÄISCHE PATENTSCHRIFT

(45) Veröffentlichungstag der Patentschrift :
07.04.82

(51) Int. Cl.³ : **A 23 G   1/04,** B 02 C 19/12

(21) Anmeldenummer : 80102250.0

(22) Anmeldetag : 25.04.80

(54) **Verfahren und Vorrichtung zur Vorvermahlung von Kakaokerngut.**

(30) Priorität : 26.04.79 CH 3961/79

(43) Veröffentlichungstag der Anmeldung :
**12.11.80 (Patentblatt 80/23)**

(45) Bekanntmachung des Hinweises auf die Patenterteilung : 07.04.82 Patentblatt 82/14

(84) Benannte Vertragsstaaten :
**CH DE GB IT LI NL**

(56) Entgegenhaltungen :
DE - A - 1 482 515
DE - A - 1 507 473
DE - B - 1 007 608
DE - B - 1 226 406
FR - A - 1 567 475

(73) Patentinhaber : Gebrüder Bühler AG

CH-9240 Uzwil (CH)

(72) Erfinder : Kuster, Werner
Bogenstrasse 16
CH-9244 Niederuzwil (CH)

(74) Vertreter : Patentanwälte Manitz, Finsterwald und
Grämkow
Robert-Koch-Strasse 1
D-8000 München 22 (DE)

Imprimerie Jouve, 18, rue St-Denis, 75001 Paris, France

## Verfahren und Vorrichtung zur Vorvermahlung von Kakaokerngut

Die Erfindung betrifft ein Verfahren und eine Vorrichtung zur Vorvermahlung von Kakaokerngut, bei welchem das Kakaokerngut einer Vormahlvorrichtung zugeführt und in dieser vermahlen und das vermahlene Produkt aus der Mühle abgeführt wird.

Unter Kakaokerngut sind im Sinne der vorliegenden Erfindung sowohl geröstete als auch ungeröstete geschälte Kakaobohnen zu verstehen, welche eventuell auch schon vorgebrochen sein können. Das zu verarbeitende Kerngut ist also sehr grobkörnig, so daß es zunächst einem Vormahlprozeß unterworfen werden muß. Im Verhältnis zu einer anschließenden Feinmahlstufe entsteht beim Vormahlen von Kakaokerngut etwa die 4 bis 5-fache Wärmemenge. Hierbei besteht die Gefahr, daß durch zu große Erhitzung des Kerngutes unerwünschte Aromaänderungen oder sonstige Schädigungen des Produktes auftreten.

Im Verlauf der Herstellung von Kakaoerzeugnissen wird ein Ausgangsprodukt, z.B. Kakaokerne oder Kakaokernbruch, einer Reihe von Behandlungsvorgängen unterworfen, unter denen das Zerkleinern und Verflüssigen desselben eine bedeutende Rolle spielt. Bei einem bekannten Verfahren wird das Ausgangsprodukt einer Vormahlvorrichtung zugeführt und in dieser einem Vermahlvorgang und einem anschließenden weiteren Behandlungsvorgang unterworfen, bei dem das schon vermahlene Produkt vermischt, homogenisiert und transportiert wird. Der Betrieb findet bei atmosphärischem Druck und bei Mahltemperaturen von 100° bis 130 °C statt.

Der Vormahlvorrichtung wird ein Ausgangsprodukt zugeführt, das einen Feuchtigkeitsgehalt von nicht mehr als 2,5 % besitzt. Das aus der Vormahlvorrichtung abgeführte Produkt ist noch mit unerwünschten, flüchtigen Stoffen beladen und weist im wesentlichen gleiche Temperaturen und gleichen Feuchtigkeitsgehalt auf. Entsprechend wird das Produkt zu einem späteren Zeitpunkt in einem Conchlerverfahren verrührt, entfeuchtet und von unerwünschten, flüchtigen Stoffen befreit, d.h. veredelt.

Bei dem bekannten Verfahren bedeuten die auftretenden, hohen Mahltemperaturen ungenutzte Wärme und Energieverluste und unter Umständen eine Verschlechterung des Produktes. Der Feuchtigkeitsgrad des Ausgangspunktes darf 2,5 % nicht überschreiten, was eine ernsthafte Einschränkung bedeutet. Ein feuchteres Ausgangsprodukt müßte daher vorgetrocknet werden, um mit Erfolg vermahlen werden zu können. Die Veredelung muß in einem separaten Verfahrensschritt in einer besonderen Einrichtung durchgeführt werden. Der erforderliche Aufwand an Investition, Energie und Herstellungskosten ist dabei unerwünscht hoch. Hierbei wird die Vormahlwärme nicht ausgenutzt und es ist ist zusätzliche Heizenergie erforderlich.

Bei einem bekannten Verfahren (DE-B 10 07 603) mit einer Veredelung nach der Vorvermahlung wird die Kakao- und Schokoladenmasse nach der Vorvermahlung in dünner Schicht durch einen vorzugsweise unter Vakuum stehenden beheizten Ausdampfungsraum gefördert, wobei flüchtige Stoffe abgezogen werden. Dabei entwichene Aromastoffe können später wiedergewonnen werden.

Demgegenüber besteht die Aufgabe der vorliegenden Erfindung darin, Kakaokerngut auch bei höheren Feuchtigkeitsgehalten als bisher üblich schon in der Vormahlstufe zu entfeuchten bzw. zu entgasen, ohne daß es durch Überhitzung des Mahlgutes zu Aromaschäden kommt und zusätzliche Heizenergie erforderlich ist.

Zur Lösung dieser Aufgabe sieht die Erfindung vor, daß, während das Produkt vorvermahlen wird, bei einem absoluten Druck von höchstens 0,8 bar, vorzugsweise höchstens 0,6 bar und insbesondere bei etwa 0,2 bar aus mindestens einem Mahlraum der Vormahlvorrichtung der Brüden kontinuierlich abgezogen wird. Aufgrund des erfindungsgemäß an die Vormahlvorrichtung angelegten Vakuums mit einem Unterdruck von mindestens 0,2, vorzugsweise 0,4 und vorzugsweise etwa 0,8 bar wird innerhalb der Vormahlvorrichtung ein so starker Verdampfungs- bzw. Verdunstungsprozeß in Gang gesetzt, daß das Mahlgut auf Temperaturen von höchstens 80 bis 100 °C abgekühlt wird. Hierdurch wird einmal erreicht, daß Aromaschäden durch Überhitzung des Mahlgutes vermieden werden. Des weiteren wird die Entfeuchtung, bzw. Entgasung des Mahlgutes, welche gleichzeitig eine Veredelung bedeutet, ohne eine Energie erfordernde Aufheizung des Mahlgutes vorgenommen. In vorteilhafter Weise wird die beim Vormahlprozeß entstehende Wärme in optimaler Zusammenwirkung mit dem angelegten Vakuum zur Entfeuchtung und Entgasung ausgenutzt. Mit anderen Worten wird ein besonderer Kombinationseffekt erzielt, in dem die erwünschte Entfeuchtung und Entgasung von einer Kühlung begleitet ist, welche jedoch auf ein solches Ausmaß gegrenzt ist, daß sich eine zusätzliche Heizung des Mahlgutes erübrigt.

Aufgrund der durch das erfindungsgemäße Vorgehen bedingten Veredelung des Kakaokern-Mahlgutes kann das spätere Conchieren wesentlich abgekürzt werden.

Selbst wenn der Feuchtigkeitsgehalt des als Ausgangsprodukt für das erfindungsgemäße Verfahren dienenden Kakaokerngutes über 3 %, beispielsweise zwischen 3 und 6 % liegt, kann mit dem erfindungsgemäßen Verfahren eine voll befriedigende Entfeuchtung erzielt werden. Es kann sowohl schwach geröstetes Kerngut mit einem Feuchtigkeitsgehalt bis 4 % als auch ungeröstetes Kerngut mit einem Feuchtigkeitsgehalt von 3 bis 6 % verarbeitet werden.

Mit dem Brüden werden aus dem Mahlraum außer Feuchtigkeit auch Luft und flüchtige Säuren abgezogen.

Die erfindungsgemäß herbeigeführte Entfeuchtung ist auch deswegen wichtig, weil hierdurch eine bessere Verflüssigung erreicht werden kann, denn infolge des Wasserentzuges bleibt in dem Mahlgut weniger Fett gebunden.

Zusammenfassend ergibt also der Unterdruck im Mahlraum wesentlich niedrigere Mahltemperaturen, eine größere Verdampfung der im Produkt enthaltenen Feuchtigkeit sowie eine bessere Entsäuerung und Entgasung. Durch kontinuierliches Abziehen des Brüden wird das Produkt veredelt, so daß ein zusätzlich notwendiges Veredelungsverfahren wesentlich vereinfacht wird. Es werden hierdurch Energie und Kosten gespart. Weiter kann ein nicht oder nur wenig vorgetrocknetes Produkt als Ausgangsmaterial verwendet werden, was ebenfalls wesentlich zur Energieeinsparung beiträgt.

Erfindungsgemäß wird also das Vakuum vorzugsweise auf einen solchen Wert eingestellt, daß das Mahlgut eine Temperatur von 80 bis 100 °C annimmt.

Die bevorzugte Vorrichtung zur Durchführung des erfindungsgemäßen Verfahrens mit einer mindestens eine Stufe aufweisenden Vormahlvorrichtung zur Vermahlung von Kakaokerngut kennzeichnet sich dadurch, daß jede Stufe der Vormahlvorrichtung eine Engspaltmühle auweist, daß an der Eingangsseite der Vormahlvorrichtung eine Abdichtungsvorrichtung vorgesehen ist, die den Eingang der Vormahlvorrichtung nach außen abdichtet, und daß an der Ausgangsseite der letzten Stufe der Vormahlvorrichtung eine Vakuumerzeugungseinrichtung vorgesehen ist, die zumindest aus der letzten Stufe den Brüden abzieht und dort zugleich den Unterdruck erzeugt.

Vorteilhafte Weiterbildungen der Erfindung sind durch die Unteransprüche gekennzeichnet. Der Behandlungsraum für das Mahlprodukt dient hauptsächlich dazu, das Produkt so durchzurühren, daß möglichst viel Oberfläche der im Behandlungsraum vorhandenen Atmosphäre ausgesetzt wird, so daß die Entfeuchtung bzw. Verdampfung begünstigt wird.

Mit Vorteil findet der Vermahlungsvorgang nach der Erfindung in einer in der DE-B-15 07 473 offenbarten Prallmühle mit zwangläufig und stetig arbeitender Produktzufuhr zu einem Rotor statt. In einer solchen Mühle sind Prallwerkzeuge des Rotors mit geringem Abstand von einer zylindrischen, zumindest teilweise als Sieb ausgebildeten Begrenzungsfläche umgeben. Die Prallwerkzeuge stehen in bestimmten Umfangsabständen des Rotors als starre Wände oder Stifte auf dessen geschlossener Umfangsmantelfäche hervor. Sie sind in querliegenden, entsprechend ausgebildeten Nuten entlang der Umfangsmantelfläche des Rotors einschiebbar. Die Veredelung hingegen wird in von der Prallmühle getrennten Vorrichtungen und Maschinen, gewöhnlich in einer Conche, durchgeführt.

Die Mahlvorrichtung kann auch eine Kugelmühle, insbesondere Rührwerksmühle oder eine Reibspaltmühle sein. Der zusätlich notwendige Konstruktionsaufwand ist dabei relativ gering.

Als Vormahlvorrichtung kann vorteilhaft eine Prall- und Schermühle pro Stufe vorgesehen sein, die eine zwangsläufig und stetig arbeitende Produktzufuhr zu einem Rotor aufweist. In einer solchen Vormahlvorrichtung sind Prallwerkzeuge des Rotors mit geringem Abstand von einer zylindrischen, zumindest teilweise als Sieb ausgebildeten Begrenzungsfläche umgeben und stehen in bestimmten Umfangsabständen des Rotors aus dessen geschlossener Umfangsfläche hervor. Solche Mühlen werden schon seit einiger Zeit gebaut und haben sich für den vorliegenden Zweck gut bewährt.

Vorteilhaft ist es, wenn die Vakuumvorrichtung an der Seite der Behandlungsvorrichtung angeschlossen ist, die dem Auslauf dieser Behandlungsvorrichtung entgegengesetzt ist. Dann wird das Produkt von diesem Anschluß weg befördert. Dabei ist es angezeigt, die Behandlungsvorrichtung auf der Seite des Vakuumanschlusses über den Anschluß mit der Mahlvorrichtung zu verlängern.

Nachstehend werden Ausführungsbeispiele der Erfindung anhand der Zeichnung erläutert. Es zeigen:

Figur 1 eine Vorderansicht einer unter Unterdruck betreibbaren, ersten Ausführungsform der Erfindung mit einer einstufen Vormahlvorrichtung, einer Abdichtungsvorrichtung und einer Vakuumerzeugungseinrichtung,

Figur 2 eine einstufige Prall- Vormahlvorrichtung mit Einspeisevorrichtung,

Figur 3 eine Seitenansicht einer zweiten Ausführungsform der Erfindung mit einer zweistufigen Vormahlvorrichtung, deren beide Stufen unter Unterdruck betreibbar sind,

Figur 4 Eine Vorderansicht der Ausführungsform nach der Fig. 3 und

Figur 5 eine Vorderansicht einer dritten Ausführungsform mit einer zweistufigen Vormahlvorrichtung, bei der allein die zweite Stufe unter Unterdruck betreibbar ist.

In den Figuren sind gleiche Teile mit gleichen Bezugszeichen versehen.

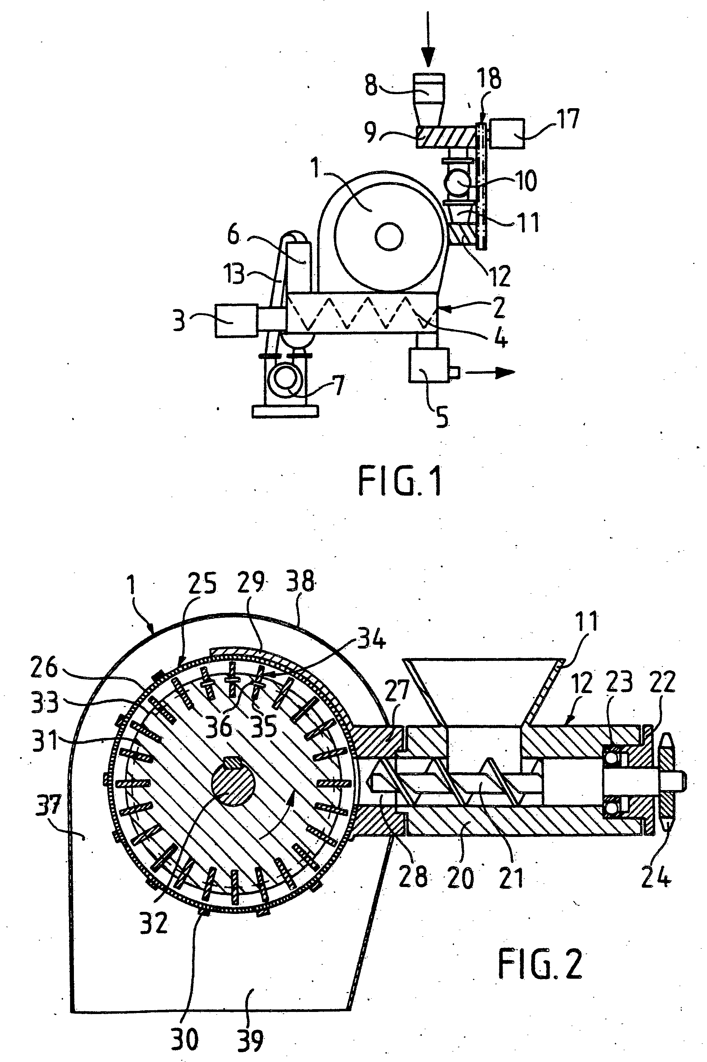

In Figur 1 ist der Vormahlvorrichtung 1, z.B., einer Prall- und Schermühle, eine Einspeisevorrichtung 12 vorgeschaltet und eine Behandlungsvorrichtung 2 mit einer Schnecke 4, die durch eine Antriebsvorrichtung 3 angetrieben ist, nachgeschaltet. Nahe am Eingang der Einspeisevorrichtung 12, die in der Praxis eine Einspeiseschnecke ist, ist ein Einlauftrichter 8 mit Magnetschieber, eine Dosierschnecke 9, eine Abdichtungsvorrichtung 10, z.B. eine Schleuse, insbesondere Zellenradschleuse, und ein in die Einspeisevorrichtung 12 mündendes, als Trichter ausgebildetes Zwischenstrück 11 angeordnet. Der Einlauftrichter 8 dient als Zuführvorrichtung für das Ausgangsprodukt, wogegen der Magnetschieber zur Ausscheidung von Eisenteilen vorgesehen ist. Die Behandlungsvorrichtung 2 weist an ihrem der Antriebsvorrichtung 3 zugewendeten Ende den Absaufkasten 6, z.B. einen Kaskadenabscheider, die an diesen über die Leitung 13 angeschlossene Vakuumpumpe 7, z.B. eine Wasserringpumpe, und an ihrem Auslaufende den Auslaufkasten 5 auf. Die Vorrichtungen 9 und 12 stehen miteinander über einen Antriebsmechanismus 18, z.B. einen Kettenantrieb, in Abtreibsverbindung, wobei ihre relativ zueinander in festem Verhältnis stehende Drehzahlen mittels des Variators 17 eingestellt werden können.

An der Leitung 13 ist ein in der Zeichnung nicht dargestellter Falschluftstutzen mit Klappe vorgesehen. Die Klappe kann stufenlos geöffnet und somit Außenluft in gewünschten Mengen in die Leitung 13 eingelassen werden. Damit kann der Unterdruck nach Wunsch eingestellt werden.

Am Auslaufende der Behandlungsvorrichtung 2 ist eine Abdichtungsvorrichtung nicht nötig, da der Auslaufkasten 5 an eine in der Zeichnung nicht dargestellte Produkt-Förderpumpe angeschlossen ist. Wenn dies nicht der Fall ist, muß für eine entsprechende Abdichtung gesorgt werden.

In Fig. 2 ist die aus der DE-B-15 07 473 bekannte Prall- und Scher- Vormahlvorrichtung 1 mit einer Einspeisevorrichtung 12 und einem als Speisetrichter ausgebildeten Zwischenstück 11 dargestellt. Im Gehäuse 20 der Einspeisevorrichtung 12 ist eine Förderschnecke 21 drehbar angeordnet, zu deren Lagerung das zwischen dem Gehäuse 20 und einem Deckel 22 festgehaltene Wälzlager 23 dient. Der Antrieb der Förderschnecke 21 erfolgt über das Antriebsrad 24. Das Gehäuse 20 mit der Förderschnecke 21 ist mit einem Gehäuse 25 der Vormahlvorrichtung 1 verbunden. Zwischen zwei in der Fig. 2 nicht sichtbaren, seitlichen Abschlußwänden ist ein das Gehäuse 25 bildendes Sieb 26 angeordnet. Um dieses Sieb 26 in der gewünschten Lage zu halten, ist im Anschluß an ein Verbindungsstück 27 mit einer Eintriffsöffnung 28 von der Einspeisevorrichtung 12 eine geschlossene Wandung 29 vorgesehen, während mit Abstand davon und mit Abstand unter sich einzelne, zwischen den besagten Abschlußwänden angeordnete Haltestege 30 vorgesehen sind. Im Gehäuse 25 ist ein Rotor 31 auf der Welle 32 befestigt. Über diese wird der Rotor 31 angetrieben. Entlang der Umfangsmantelfläche 33 sind kreuzförmig Nuten vorgesehen, in welche die Prallwerkzeuge 34 eingeschlossen sind. Diese bestehen aus Leisten 35 und sind mit beidseitig vorspringenden Stiften 36 versehen. Die Länge der Prallwerkzeuge 34 entspricht weitgehend der Breite des Rotors 31 und diese wiederum im wesentlichen dem Abstand zwischen den seitlichen Abschlußwänden. Der Raum außerhalb des Gehäuses 25 ist als Sammelkanal 37 ausgebildet und durch eine Kanalwandung 38 begrenzt. Diese Kanalwandung 38 läuft zu einem Auslaß 39 zusammen. Über diesen fließt das Produkt aus der Mahlvorrichtung 1 in die Behandlungsvorrichtung 2 über.

Das Ausgangs-Kakaokerngut, z.B. in der Form von Kakaokernbruch, wird in den Einlauftrichter 8 geschüttet und über die Dosierschnecke 9 der Abdichtungsvorrichtung 10 zugeleitet. Diese gewährleistet eine annähernd luftdichte Einspeisung des Produktes in die Vormahlvorrichtung 1 über das Zwischenstück 11 und die Einspeisevorrichtung 12. Das vermahlene Produkt fließt aus der Mahlvorrichtung 1 in die Behandlungsvorrichtung 2 und wird durch die Schnecke 1 zum Auslaufkasten 5 befördert und mittels der Produkt-Förderpumpe abgeführt. Dabei wird der Brüden durch die Vakuumpumpe 7 aus der Mahlvorrichtung 1 und der Behandlungsvorrichtung 2 über den Absaugkasten 6 kontinuierlich abgezogen. Damit wird in den Vorrichtungen 1 und 2 der erforderliche Unterdruck erzeugt. Mit der Brüde entweichen Luft, Feuchtigkeit und unerwünschte, flüchtige Stoffe aus dem Produkt, welches die Behandlungsvorrichtung 2 somit in veredeltem Zustand verläßt.

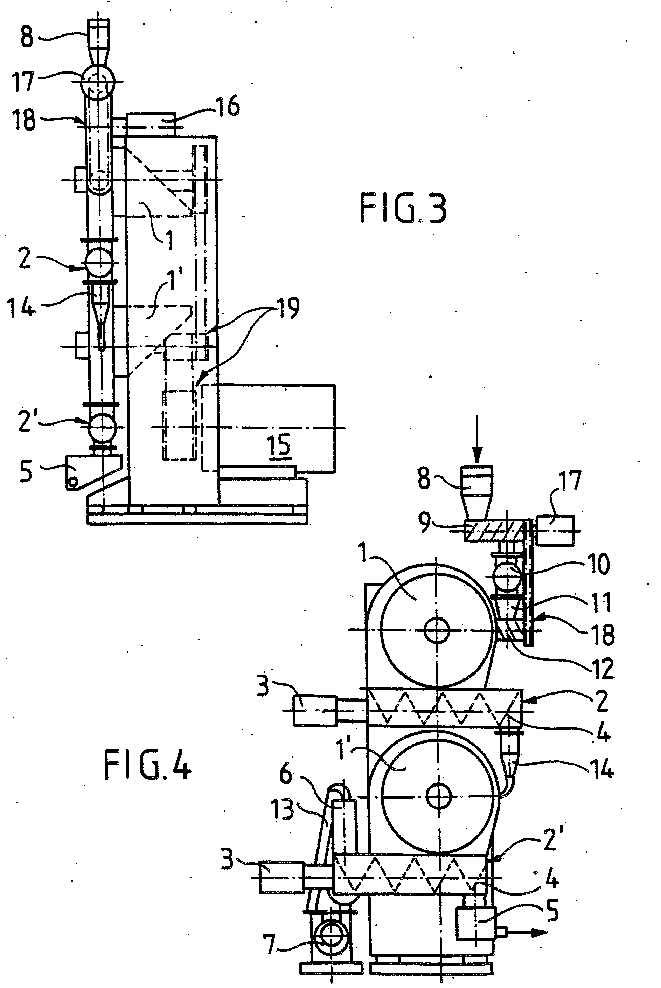

Die Ausführungsform nach den Figuren 3 und 4 unterscheidet sich von der vorbeschriebenen dadurch, daß die Mühle zwei nacheinandergeschaltete Stufen mit je einer Vormahlvorrichtung 1, 1′, z.B. einer Prallmühle, und einer Behandlungsvorrichtung 2, 2′, aufweist. Der Einlauftrichter 8, die Dosierschnecke 9, die Abdichtungsvorrichtung 10 und die Einspeisevorrichtung 12 sind an der Eingangsseite der ersten Vormahlvorrichtung 1, wogegen der Absaugkasten 6 die Vakuumpumpe 7 und die Leitung 13 am Ausgangsende der zweiten Behandlungsvorrichtung 2′ angeordnet ist. Das Produkt fließt von der ersten Behandlungsvorrichtung 2 in die zweite Mahlvorrichtung 1′ über den Einlaufstutzten 14. Der Antriebsmotor 15 und der Antriebsmechanismus 19, bestehend aus Scheiben, Riemen, treiben die Mahlvorrichtungen 1, 1′, und der Antriebsmotor 16 die Schleuse an. Der Variator 17 mit dem Antriebsmechanismus 18 dient auch hier zur stufenlosen Einstellung der Drehzahlen der Teile 9 und 12. Im Betrieb können beide Stufen 1, 2 und 1′, 2′ unter Unterdruck gehalten werden. In einem praktischen Fall kann der Betrieb dieser Ausführungsform unter folgenden Bedingungen durchgeführt werden:

| | |
|---|---|
| Feuchtigkeitsgehalt des Ausgangsproduktes | 5 % |
| Betriebsdruck | 0,6 bar (abs.) |
| Betriebstemperatur | 90 °C |
| Menge des abgezogenen Brüdens | 2,5 % |

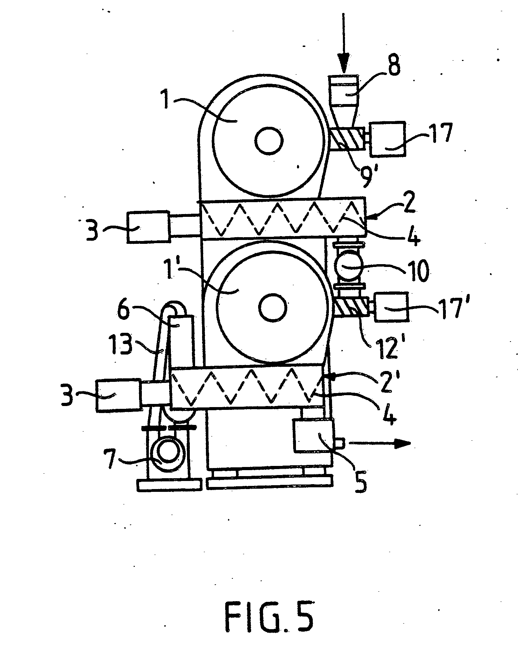

Die Ausführungsform nach der Fig. 5 weist ebenfalls eine Vormahlvorrichtung mit zwei Stufen auf, die derjenigen nach den Fig. 3 und 4 gleich ist. Die Abdichtungsvorrichtung 10 ist jedoch an der Eingangsseite der zweiten Stufe 1′ zwischen der ersten Behandlungsvorrichtung 2 und der zweiten Einspeisevorrichtung 12′ angeordnet. An der Eingangsseite der ersten Stufe 1 ist eine Dosierschnecke 9′ und ein diese speisender Einlauftrichter 8 angeordnet. Der Dosierschnecke 9′ und der Einspeisevorrichtung 12′ ist je ein Variator 17 bzw. 17′ zur Einstellung ihrer Drehzahlen zugeordnet. Die Einspeisevorrichtung 12′ empfängt das Kakaoprodukt von der Behandlungsvorrichtung 2 über die Abdichtungsvorrichtung 10 und führt es der zweiten Stufe 1' zu. Die Vermahlung kann in der ersten Stufe nur unter atmosphärischem Druck, in der zweiten Stufe hingegen auch unter Unterdruck durchgeführt werden.

Eine gezielte Steuerung des Veredelungsvorganges kann z.B. dadurch erzielt werden, daß der Mühle ein dampf- oder gasförmiges Trägermedium kontinuierlich oder in Zeitabständen zugeführt wird, welches sich zur Mitnahme unerwünschter, flüchtiger Stoffe besonders gut eignet. Das Trägermedium kann z.B. Luft, Stickstoff oder eines der inerten Gase sein. Anstelle einer Prall- und Schermühle kann als Vormahlvorrichtung eine Kugelmühle oder eine Reibspaltmühle verwendet werden.

**Ansprüche**

1. Verfahren zur Vorvermahlung von Kakaokerngut, bei welchem das Kakaokerngut einer Vormahlvorrichtung zugeführt und in dieser vermahlen und das vermahlene Produkt aus der Mühle abgeführt wird, dadurch gekennzeichnet, daß, während das Produkt vorvermahlen wird, bei einem absoluten Druck von höchstens 0,8 bar, vorzugsweise höchstens 0,6 bar und insbesondere bei etwa 0,2 bar aus mindestens einem Mahlraum der Vormahlvorrichtung der Brüden kontinuierlich abgezogen wird.

2. Verfahren nach Anspruch 1, dadurch gekennzeichnet; daß das Vakuum in dem betreffenden Mahlraum auf einen solchen Wert eingestellt wird, daß das Mahlgut eine Temperatur von 80 bis 100 °C annimmt.

3. Verfahren nach Anspruch 1 oder 2, dadurch gekennzeichnet, daß dem betreffenden Mahlraum ein dampf- oder gasförmiges Trägermedium zugeführt wird, welches unerwünschte, flüchtige Stoffe mitnimmt und zusammen mit dem Brüden abgezogen wird.

4. Verfahren nach einem der vorhergehenden Ansprüche, dadurch gekennzeichnet, daß der Brüden aus einem Behandlungsraum abgezogen wird, der an den Mahlraum angeschlossen ist und mit diesem kommuniziert.

5. Verfahren nach Anspruch 4, dadurch gekennzeichnet, daß in dem Behandlungsraum das Produkt durchgeführt, gemischt, homogenisiert und/oder transportiert wird.

6. Verfahren nach Anspruch 4 oder 5, dadurch gekennzeichnet, daß der Brüden aus einem zweiten Mahlraum abgezogen wird, der an den Behandlungsraum angeschlossen ist und mit diesem kommuniziert.

7. Verfahren nach Anspruch 6, dadurch gekennzeichnet, daß der Brüden aus einem zweiten Behandlungsraum abgezogen wird, der an dem zweiten Mahlraum angeschlossen ist und mit diesem kommuniziert.

8. Vorrichtung zur Durchführung des Verfahrens nach einem der vorhergehenden Ansprüche mit einer mindestens eine Stufe aufweisenden Vormahlvorrichtung zur Vermahlung von Kakaokerngut, dadurch gekennzeichnet, daß jede Stufe der Vormahlvorrichtung eine Engspaltmühle aufweist, daß an der Eingangsseite der Vormahlvorrichtung eine Abdichtungsvorrichtung (10) vorgesehen ist, die den Eingang der Vormahlvorrichtung (1, 1') nach außen abdichtet, und daß an der Ausgangsseite der letzten Stufe der Vormahlvorrichtung eine Vakuumerzeugungseinrichtung (6, 7, 13) vorgesehen ist, die zumindest aus der letzten Stufe der Brüden abzieht und dort zugleich den Unterdruck erzeugt.

9. Vorrichtung nach Anspruch 8, bei welcher eine Engspaltmühle und eine Behandlungskammer vorgesehen ist, dadurch gekennzeichnet, daß die Abdichtungsvorrichtung (10) einer Einspeisevorrichtung (12) vorgeschaltet ist und die Engspaltmühle (1) sowie eine Behandlungsvorrichtung (2) unter Unterdruck setzbar sind.

10. Vorrichtung nach Anspruch 9, dadurch gekennzeichnet, daß die Vakuumerzeugungseinrichtung (6, 7, 13) an derjenigen Seite der Behandlungsvorrichtung (2) angeschlossen ist, die dem Auslauf (5) dieser Behandlungsvorrichtung entgegengesetzt ist.

11. Vorrichtung nach Anspruch 8, bei welcher die Vormahlvorrichtung zwei miteinander kommunizierende Stufen mit je einer Engspaltmühle und einer Behandlungsvorrichtung aufweist, dadurch gekennzeichnet, daß die Abdichtungsvorrichtung (10) der Einspeisevorrichtung (12) der ersten Stufe vorgeschaltet ist, so daß beide Stufen unter Unterdruck setzbar sind.

12. Vorrichtung nach Anspruch 8, bei welcher die Vormahlvorrichtung zwei miteinander kommunizierende Stufen mit je einer Engspaltmühle und einer Behandlungsvorrichtung aufweist, dadurch gekennzeichnet, daß die Abdichtungsvorrichtung (10) der ersten Stufe nachgeschaltet und der Einspeisevorrichtung (12') der zweiten Stufe vorgeschaltet angeordnet ist, so daß lediglich die zweite Stufe unter Unterdruck setzbar ist.

13. Vorrichtung nach einem der Ansprüche 8 bis 12, dadurch gekennzeichnet, daß als Abdichtungsvorrichtung (10) eine Schleuse vorgesehen ist, die zur weitgehend luftdichten Einspeisung des Produktes ausgebildet ist, und daß als Vakuumerzeugungseinrichtung ein an die letzte Stufe angeschlossener Absaugkasten (6) und eine diesem nachgeschaltete Vakuumpumpe (7) vorgesehen ist.

14. Vorrichtung nach Anspruch 13, dadurch gekennzeichnet, daß zwischen dem Absaugkasten (6) und der Vakuumpumpe (7) eine Verbindungsleitung (13) mit einem an dieser angebauten Falschluftstutzen mit Klappe vorgesehen ist und daß durch Verstellung der Klappe der Unterdruck veränderbar ist.

15. Vorrichtung nach einem der Ansprüche 8 bis 14, dadurch gekennzeichnet, daß die Engspaltmühle (1, 1') mindestens einer Stufe eine Prall- oder Schermühle mit zwangsläufig und stetig arbeitender Produktzufuhr zu einem Rotor (31) ist, wobei die Prallwerkzeuge (34) des Rotors (31) mit geringem Abstand von einer zylindrischen, zumindest teilweise als Sieb (26) ausgebildeten Begrenzungsfläche umgeben sind und in bestimmten Umfangsabständen des Rotors (31) aus dessen geschlossener Umfangsmantelfläche (33) hervorstehen.

16. Vorrichtung nach einem der Ansprüch 8 bis 14, dadurch gekennzeichnet, daß die Engspaltmühle eine Kugelmühle, insbesondere eine Rührwerkmühle ist.

**Claims**

1. A process for pre-grinding cocoa nibs in which the cocoa nibs are supplied to a pre-grinding apparatus and are ground therein and the ground product is withdrawn from the mill, characterised in that, while the product is being preground at an absolute pressure of at most 0,8 bar, preferably at most 0,6 bar and particularly at approximately 0,2 bar, the vapours are continuously withdrawn from at least one grinding chamber of the pre-grinding apparatus.

2. A process in accordance with claim 1 and characterised in that the vacuum in the relevant grinding chamber is set at a value such that the ground material has a temperature in the range from 80 to 100 °C.

3. A process in accordance with claim 1 or claim 2 and characterised in that a vaporous or gaseous carrier medium which picks up undesired volatile substances is fed to the relevant grinding chamber and is withdrawn together with the vapours.

4. A process in accordance with one of the preceding claims and characterised in that the vapours are withdrawn from a treatment chamber which is attached to and is in communication with the grinding chamber.

5. A process in accordance with claim 4 and characterised in that the product is stirred up throughly, mixed, homogenised and/or transported in the treatment chamber.

6. A process in accordance with claim 4 or claim 5 and characterised in that the vapours are withdrawn from a second grinding chamber which is attached to the treatment chamber and is in communication therewith.

7. A process in accordance with claim 6 and characterized in that the vapours are withdrawn from a second treatment chamber which is connected to the second grinding chamber and is in communication therewith

8. An apparatus for carrying out the process of one of the preceding claims with a pre-grinding apparatus having at least one stage for the pre-grinding of cocoa nibs characterized in that each stage of the pre-grinding apparatus has a narrow gap mill, in that a seal device (10) is provided at the input side of the pre-grinding apparatus to seal the input of the pre-grinding apparatus (1, 1') from the outside environment, and in that a vacuum generating device (6, 7, 13) is provided at the output side of the last stage of the pre-grinding device which withdraws the vapours from at least the last stage and simultaneously generates the partial vacuum there.

9. Apparatus in accordance with claim 8 in which a narrow gap mill and a treatment chamber is provided, characterized in that the seal device (10) is inserted before an infeed device (12) and in that the narrow gap mill (1) and also a treatment device (2) can be subjected to a partial vacuum.

10. Apparatus in accordance with claim 9 and characterized in that the vacuum generating device (6, 7, 13) is attached to that side of the treatment device (2) which is remote from the outlet (5) of this treatment device.

11. An apparatus in accordance with claim 8 in which the pre-grinding apparatus has two stages which communicate with one another and each have a narrow gap mill and a treatment device, characterized in that the seal device (10) is inserted in front of the infeed device (12) of the first stage so that both stages can be subjected to a partial vacuum.

12. Apparatus in accordance with claim 8 in which the pre-grinding apparatus has two stages which communicate with each other and each have a narrow gap mill and a treatment device, characterized in that the seal device (10) is arranged after the first stage and in front of the feed device (12') of the second stage so that only the second stage can be subjected to a partial vacuum.

13. An apparatus in accordance with one of the claims 8 to 12 and characterized in that for the seal device (10) there is provided a lock which is constructed to allow substantially air-tight infeed of the product, and in that for the vacuum generating device there is provided a suction box (6) attached to the last stage with a vacuum pump (7) connected after the suction box.

14. Apparatus in accordance with claim 13 and characterized in that a connection duct (13) with an air infiltration pipe and a flap valve attached thereto is provided between the suction box (6) and the vacuum pump (7) and in that the partial vacuum can be changed by adjustment of the flap valve.

15. Apparatus in accordance with one of the claims 8 to 14 and characterized in that the narrow gap mill (1, 1') forms at least one stage of an impact or shear mill with compulsory and continuously operating product feed to a rotor (31), wherein the impact tools (34) of the rotor (31) are surrounded with a small clearance by a cylindrical boundary surface, which is at least partly constructed as a sieve (26), and project at specified peripheral intervals of the rotor (31) beyond its closed peripheral surface (33).

16. Apparatus in accordance with one of the claims 8 to 14 and characterized in that the narrow gap mill is a ball mill, in particular an agitator mill.

**Revendications**

1. Procédé pour le prébroyage de graines de cacao dans lequel les graines de cacao sont amenées à un dispositif de prébroyage et broyés dans celui-ci, et le produit broyé est évacué du moulin, caractérisé en ce que, pendant que le produit est prébroyé, sous une pression absolue d'au plus 0,8 bar de préférence d'au plus 0,6 bar et notamment sous une pression d'environ 0,2 bar, les vapeurs sont évacuées en continu d'au moins un espace de broyage du dispositif de prébroyage.

2. Procédé selon la revendication 1, caractérisé en ce que le vide régnant dans l'espace de broyage intéressé est réglé à une valeur telle que la matière moulue présente une température de 80 à 100 °C.

3. Procédé selon la revendication 1 ou 2, caractérisé en ce qu'il est amené à l'espace de broyage intéressé un fluide porteur à l'état de vapeur ou de gaz qui entraîne les matières volatiles indésirables et est évacué en même temps que les vapeurs.

4. Procédé selon une quelconque des revendications précédentes, caractérisé en ce que les vapeurs sont évacuées d'un espace de traitement qui est raccordé à l'espace de broyage et communique avec ce dernier.

5. Procédé selon la revendication 4, caractérisé en ce que, dans l'espace de traitement, le produit est brassé à fond, mélangé, homogénéisé et/ou transporté.

6. Procédé selon la revendication 4 ou 5, caractérisé en ce que les vapeurs sont évacuées d'un deuxième espace de broyage qui est raccordé à l'espace de traitement et communique avec celui-ci.

7. Procédé selon la revendication 6, caractérisé en ce que les vapeurs sont évacuées d'un deuxième espace de traitement qui est raccordé au deuxième espace de broyage et communique avec celui-ci.

8. Dispositif adapté à la mise en œuvre du procédé selon une quelconque des revendications précédentes, possédant un dispositif de prébroyage pour le broyage de graines de cacao comportant au moins un étage, caractérisé en ce que chaque étage du dispositif de prébroyage comporte un broyeur à fente de passage étroite, en ce qu'il est prévu sur le côté entrée du dispositif de prébroyage un dispositif d'étanchéité (10) qui obture hermétiquement vers l'extérieur l'entrée du dispositif de prébroyage (1, 1'), et en ce qu'il est prévu sur le côté sortie du dernier étage du dispositif de prébroyage un dispositif de production de vide (6, 7, 13) qui soutire les vapeurs du dernier étage au moins et produit en même temps à cet endroit la dépression.

9. Dispositif selon la revendication 8, dans lequel il est prévu un moulin-broyeur à fente de passage étroite et une chambre de traitement, caractérisé en ce que le dispositif d'étanchéité (10) est disposé en amont d'un dispositif d'alimentation (12) et en ce que le moulin-broyeur à fente de passage étroite (1) ainsi qu'un dispositif de traitement (2) peuvent être mis sous dépression.

10. Dispositif selon la revendication 9, caractérisé en ce que le dispositif de production de vide (6, 7, 13) est raccordé au côté du dispositif de traitement (2) qui est situé à l'opposé de la sortie (5) de ce dispositif de traitement.

11. Dispositif selon la revendication 8, dans lequel le dispositif de prébroyage comporte deux étages communiquant entre eux qui possèdent chacun un moulin-broyeur à fente de passage étroite et un dispositif de traitement, caractérisé en ce que le dispositif d'étanchéité (10) est disposé en amont du dispositif d'alimentation (12) du premier étage, de sorte que les deux étages peuvent être mis sous dépression.

12. Dispositif selon la revendication 8, dans lequel le dispositif de prébroyage comporte deux étages communiquant l'un avec l'autre, comprenant chacun un moulin-broyeur à fente de passage étroite et un dispositif de traitement, caractérisé en ce que le dispositif d'étanchéité (10) est monté en aval du premier étage et est disposé en amont du dispositif d'alimentation (12) du deuxième étage, de sorte que seul ce deuxième étage peut être mis sous dépression.

13. Dispositif selon une quelconque des revendications 8 à 12, caractérisé en ce qu'il est prévu comme dispositif d'étanchéité (10) un sas qui est conformé de façon que l'alimentation du produit s'effectue de façon aussi étanche à l'air que possible, et en ce qu'il est prévu comme dispositif d'obtention du vide une caisse aspirante (6) raccordée au dernier étage et une pompe à vide (7) disposée en aval de cette caisse.

14. Dispositif selon la revendication 13, caractérisé en ce qu'il est prévu entre la caisse aspirante (6) et la pompe à vide (7) une conduite de liaison (13) à laquelle est annexée une tubulure d'air parasite avec volet, et en ce qu'on peut faire varier la dépression en manœuvrant le volet.

15. Dispositif selon une quelconque des revendications 8 à 14, caractérisé en ce que le moulin-broyeur à fente de passage étroite (1, 1') d'au moins un étage est un broyeur à percussion ou à cisailles dans lequel l'arrivée du produit à un rotor (31) s'effectue de façon forcée et continue, les outils de percussion (34) du rotor (31) étant entourés à faible distance par une surface de limitation cylindrique conformée au moins en partie en tamis (25), et faisant saillie à l'extérieur de la surface latérale périphérique fermée (33) du rotor (31) à des distances périphériques déterminées.

16. Dispositif selon une quelconque des revendications 9 à 14, caractérisé en ce que le broyeur à fente de passage étroite est un broyeur à boulets, en particulier un broyeur-brasseur.

FIG.1

FIG.2

FIG.3

FIG.4

FIG.5